# EUROPÄISCHE PATENTSCHRIFT

(11) **EP 2 736 674 B1**
(45) Veröffentlichungstag und Bekanntmachung des Hinweises auf die Patenterteilung: **09.09.2015**
(21) Anmeldenummer: 12734948.8
(22) Anmeldetag: 12.07.2012
(51) Int. Cl.: B23Q 3/18, B23Q 16/00, B25J 19/00

(54) **POSITIONIEREINRICHTUNG UND VERFAHREN ZUM POSITIONIEREN**
POSITIONING DEVICE AND METHOD FOR POSITIONING
DISPOSITIF DE POSITIONNEMENT ET PROCÉDÉ DE POSITIONNEMENT

(30) Priorität: 28.07.2011 DE 102011080042
(43) Veröffentlichungstag der Anmeldung: 04.06.2014
(73) Patentinhaber: TRUMPF Laser-und Systemtechnik GmbH, 71254 Ditzingen (DE)
(72) Erfinder: CINCA, Eleodor, 71735 Eberdingen (DE)
(74) Vertreter: Kohler Schmid Möbus Patentanwälte
(86) Internationale Anmeldenummer: PCT/EP2012/063646
(87) Internationale Veröffentlichungsnummer: WO 2013/013988

(56) Entgegenhaltungen:
- EP-A1- 1 543 915
- DE-C1- 19 620 195
- SCHWEIGERT U: "VIBRATIONSUNTERSTUETZUNG ERMOEGLICHT PRAEZISIONSMONTAGE", TECHNISCHE RUNDSCHAU, HALLWAG AG, CH, Bd. 84, Nr. 6, 7. Februar 1992 (1992-02-07), Seiten 48-52, XP000247720, ISSN: 1023-0823

## Beschreibung

Die vorliegende Erfindung betrifft eine Positioniereinrichtung sowie ein Verfahren zur lagerichtigen Positionierung einer planen Kontaktfläche eines Bearbeitungswerkzeugs, insbesondere eines Laserbearbeitungskopfs, relativ zu einer planen Kontaktfläche eines Trägerelements.

Aus der EP 1 543 915 A1 ist eine Kollisionsschutzeinrichtung eines Laserbearbeitungskopfs bekannt geworden, die eine lösbare, magnetische Kupplung des Laserbearbeitungskopfes an einem Träger und eine durch Kegelstümpfe ausgebildete Zentriereinrichtung zur Zentrierung während der Kupplung aufweist. Die magnetische Kupplung soll eine gute Halterung des Laserbearbeitungskopfs und ein schnelles Lösen des Laserbearbeitungskopfs bei einer Kollision sicherstellen.

In der DE 35 23 887 C2 ist ein Laser beschrieben, der über eine Magnetkupplung mit einem Bearbeitungskopf verbunden ist. Die Magnetkupplung besteht aus einem am Laser befestigten magnetischen Halter und einer am Bearbeitungskopf befestigten Zentrierung. Die Zentrierung weist einen in eine Bohrung des magnetischen Halters eingreifenden Bund auf, dessen Höhe so bemessen ist, dass auch bei seitlich auf die Zentrierung wirkenden Kräften die Verbindung zwischen Zentrierung und magnetischem Halter gelöst wird.

In der DE 197 01 516 C1 wird eine Einrichtung zur Bearbeitung eines Werkstücks mittels eines Laserstrahls beschrieben, bei der ein Bearbeitungskopf über Magnete an einem ringförmigen Trägerteil gehalten wird. Eine zwischen dem ringförmigen Trägerteil und dem Bearbeitungskopf liegende Zentriereinrichtung dient zur Zentrierung von ringförmigem Trägerteil und Bearbeitungskopf zueinander. Die Zentriereinrichtung weist mehrere Kugeln auf, die in Umfangsrichtung von ringförmigem Trägerteil und Bearbeitungskopf im Abstand voneinander angeordnet sind, um auch im Falle einer Kollision nahe der Zentriereinrichtung ein sicheres Ablösen des Bearbeitungskopfs vom ringförmigen Trägerteil zu gewährleisten.

Die DE 26 40 256 offenbart eine selbstanpassende Tast-Vorrichtung für Arbeitsmaschinen mit einem Werkzeug, das mit einem Arbeitskopf über eine Kupplung verbunden ist, die eine erste Stellung einnehmen kann, in der sie eine gewisse Verschiebung des Werkzeugs in Bezug auf den Arbeitskopf zulässt, sowie eine zweite Stellung, in der sie das Werkzeug an dem Arbeitskopf festklemmt. Das Werkzeug wird durch Anlegen einer Spannung an einen Elektromagneten gehalten, wobei die zwei Stellungen unterschiedlichen Spannungen (8 V, 24 V) und damit auch unterschiedlichen Haltekräften zugeordnet sind. In der ersten Stellung (bei einer kleineren Spannung) ist das Werkzeug in Bezug auf den Arbeitskopf noch radial verschiebbar (unterstützt durch ein Luftlager), während das Werkzeug in der zweiten Stellung (bei einer größeren Spannung) am Arbeitskopf festgeklemmt wird.

Die DE 196 20 195 C1 offenbart ein Füge- oder Trennmodul für einen Industrieroboter zum Feinpositionieren von Werkzeugen an Werkstücken mit Vibrationsunterstützung. Das Modul umfasst einen Vibratorkopf, der mindestens zwei Platten umfasst, wobei an einer Platte ein Werkzeuggreifer angeordnet ist und die zwei Platten gegenüber einer werkstückabgewandten Basis des Vibratorkopfs jeweils entlang einer Längsrichtung oszillierend antreibbar sind, so dass der Werkzeuggreifer in einer Ebene vibrierend bewegbar ist. Die vibrationsunterstützte Bewegung erfolgt in einer Ebene parallel zur Bearbeitungsfläche und kann zur Durchführung von Toleranzausgleichsstrategien oder Suchstrategien bei Montage- und Demontagevorgängen genutzt werden.

Bei der mechanischen Indexierung zur lagerichtigen Positionierung eines Bearbeitungswerkzeugs an einem Trägerelement wie sie in der eingangs zitierten EP 1 543 915 A1 dargestellt ist, tritt das Problem auf, dass die hierbei erreichte Positionierung ggf. zu ungenau für die Sicherstellung einer ausreichenden Bearbeitungsqualität ist. Auch ist eine Positionskorrektur einer einmal erkannten Fehlpositionierung aufgrund der Haltekräfte bzw. der Reibungskräfte zwischen Laserbearbeitungskopf und Trägerelement problematisch.

### Aufgabe der Erfindung

Es ist die Aufgabe der vorliegenden Erfindung, eine Positioniereinrichtung sowie ein Verfahren zum lagerichtigen Positionieren anzugeben, welche eine genaue und reproduzierbare Positionierung eines Bearbeitungswerkzeugs relativ zu einem Trägeelement ermöglichen.

### Gegenstand der Erfindung

Diese Aufgabe wird erfindungsgemäß gelöst durch eine Positioniereinrichtung zur lagerichtigen Positionierung einer planen Kontaktfläche eines Bearbeitungswerkzeugs, insbesondere eines Laserbearbeitungskopfs, relativ zu einer planen Kontaktfläche eines Trägerelements, umfassend: eine Magnetanordnung, die zum Erzeugen einer magnetischen Haltekraft zwischen den Kontaktflächen zur Halterung des Bearbeitungswerkzeugs an dem Trägerelement ausgebildet ist, sowie eine Steuereinrichtung, die zum Erzeugen einer Oszillation der magnetischen Haltekraft der Magnetanordnung ausgebildet bzw. programmiert ist, um durch Erzeugung einer Vibrationsbewegung die Kontaktflächen relativ zueinander in einer gemeinsamen Kontaktebene zu bewegen, bis eine Haltestellung mit einer vorgegebenen relativen Lage der Kontaktflächen zueinander erreicht ist. Unter einer Oszillation der magnetischen Haltekraft wird ein - mehr oder minder-regelmäßiger Übergang zwischen zwei Zuständen der magnetischen Haltekraft verstanden, wobei in dem ersten Zustand die Kontaktflächen aneinander anliegen und in dem zweiten Zustand geringfügig voneinander beabstandet sind, so dass durch die Oszillation eine Vibrationsbewegung entsteht.

Erfindungsgemäß wird vorgeschlagen, aus einer ersten Haltestellung, in welcher das Bearbeitungswerkzeug an dem Trägerelement in einer grob positionierten Stellung unter typischer Weise paralleler Ausrichtung der (planen) Kontaktflächen zueinander gehalten wird, durch Erzeugen einer Vibrationsbewegung die Kontaktflächen relativ zueinander zu bewegen, um eine Feinpositionierung zu ermöglichen und hierbei die Kontaktflächen aus der ersten in eine zweite Haltestellung zu verbringen, bei der die Kontaktflächen eine gewünschte relative (End-)lage zueinander aufweisen. Als Endlage kann hierbei eine Lage bzw. Positionierung angesehen werden, in welcher mindestens ein Indexierelement an dem Bearbeitungskopf (bzw. dem Trägerelement) eine vorgegebene, typischer Weise zentrierte Lage in Bezug auf eine an dem Trägerelement (bzw. dem Bearbeitungskopf) angebrachte Aufnahme aufweist.

Bei einer Ausführungsform umfasst die Magnetanordnung einen Elektromagneten und die Steuereinrichtung ist zum Anlegen eines oszillierenden Steuersignals an den Elektromagneten ausgebildet bzw. programmiert. Durch Aufbringung einer die statische Haltekraft überlagernden Kräfteoszillation, die durch ein oszillierendes Steuersignal bewirkt wird, kann eine senkrecht zu den Kontaktflächen wirkende Vibrationsbewegung eingeleitet werden, welche die oben beschriebene Feinpositionierung ermöglicht. Unter dem Begriff "die Haltekraft überlagernde Kräfteoszillation" wird hierbei ein Steuersignal mit einer Amplitude verstanden, das durch eine kurzfristig gegenpolige Magnetfeldinduzierung eine ebenso kurzfristige Beabstandung der Kontaktflächen entgegen der Haltekraft verursacht.

Wie in der eingangs erwähnten EP 1 543 915 A1 beschrieben ist, kann an den Elektromagneten als Steuersignal eine konstante Spannung angelegt werden, um die Haltekraft in der ersten Haltestellung aufzubringen oder diese zu verstärken. Der Elektromagnet der Magnetanordnung kann sowohl für die Grob- als auch für die Feinpositionierung gemeinsam genutzt werden. Alternativ auch jeweils ein Elektromagnet für die Grobpositionierung und ein Elektromagnet für die Feinpositionierung vorgesehen sein.

In einer Weiterbildung ist die Steuereinrichtung zum Erzeugen eines Steuersignals in Form einer Wechselspannung oder eines Impulssignals mit einer vorgegebenen (konstanten oder veränderlichen) Frequenz und Amplitude ausgebildet. Die zur Feinpositionierung erforderliche Vibrationsbewegung im Wesentlichen senkrecht zu den Kontaktflächen kann mittels des Elektromagneten über das Anlegen einer Wechselspannung eingeleitet werden. Je nach Art des Elektromagneten kann die Amplitude der Wechselspannung beispielsweise zwischen ca. 6 V und ca. 60 V betragen, wobei sich Frequenzen zwischen ca. 25 Hz und ca. 100 Hz als günstig erwiesen haben. Die hierüber periodisch eingebrachte, gegenüber dem statischen Magnetfeld gegenpolige Magnetfeldinduzierung ist so auszulegen, dass die Haltekraft kurzzeitig so weit überwunden wird, dass dadurch eine periodische Beabstandung der Kontaktflächen ermöglicht wird, die. z.B. zwischen ca. 0,01 mm und ca. 0,1 mm betragen kann. An Stelle der Wechselspannung können auch Spannungsimpulse mit vorgegebener Frequenz und Amplitude genutzt werden, wobei die Form des Impulssignals z.B. rechteckig, sägezahnartig oder sinusförmig sein kann. Die Verwendung eines Impulssignals ist insbesondere bei Bearbeitungsmaschinen günstig, die mit Gleichstrom betrieben werden, da in diesem Fall keine separaten Komponenten zur Erzeugung der Wechselspannung in die Bearbeitungsmaschine integriert werden müssen. Sowohl das Wechselspannungsals auch das Spannungsimpulssignal können während der Zeitdauer der Vibrationsbewegung sowohl hinsichtlich Frequenz als auch in der Amplitude konstant oder veränderlich, bspw. in Form von Rampen, vorgegeben werden.

In einer weiteren Ausführungsform umfasst die Positioniereinrichtung eine Sensoreinrichtung zum Erkennen einer Haltestellung, bei der die Kontaktflächen eine vorgegebene relative Lage zueinander aufweisen. Die Sensoreinrichtung (ggf. in Verbindung mit einer Auswerteeinheit) erlaubt die Abfrage von vorgegebenen Kontaktbedingungen, bei der die Kontaktflächen ihre vorgegebene Endstellung, z.B. eine vorgegebene Winkellage, zueinander aufweisen.

In einer Weiterbildung ist die Sensoreinrichtung zum Erkennen einer vorgegebenen, relativen Lage mindestens eines Indexierelements, welches bevorzugt an einer Kontaktfläche gebildet ist, in Bezug auf eine zugehörige Aufnahme ausgebildet, welche bevorzugt an der anderen Kontaktfläche gebildet ist. Das Erreichen einer vorgegebenen, beispielsweise zentrierten Lage von Indexierelementen, die an einer Kontaktfläche angebracht sind, in zugehörigen Aufnahmen an der anderen Kontaktfläche kann z.B. von der Sensoreinheit detektiert werden, wenn beim Erreichen der vorgegebenen Kontaktbedingungen ein Stromkreis geschlossen wird. Es versteht sich, dass Indexierelemente und Aufnahmen nicht zwingend an den Kontaktflächen selbst vorgesehen werden müssen, sondern dass diese ggf. auch an anderer Stelle an dem Trägerelement bzw. an dem Bearbeitungswerkzeug vorgesehen werden können.

In einer Ausführungsform weist die Magnetanordnung mindestens einen Permanentmagneten zum Erzeugen einer statischen magnetischen Haltekraft zwischen den Kontaktflächen auf. Der bzw. die Permanentmagnete erzeugen eine konstante Haltekraft und können zur Grobpositionierung dienen. Insbesondere kann die Stärke der Permanentmagnete so gewählt werden, dass das Bearbeitungswerkzeug gegen die Wirkung der Gewichtskraft an dem Trägerelement gehalten werden kann. Dies hat den Vorteil, dass das Bearbeitungswerkzeug unabhängig vom Maschinenbetrieb und der damit gekoppelten Stromversorgung am Trägerelement gehalten wird.

Bei einer Ausführungsform umfasst die Positioniereinrichtung einen Bearbeitungskopf, insbesondere einen Laserbearbeitungskopf, und ein Trägerelement. Die Positioniereinrichtung ist typischer Weise Teil einer Bearbeitungsmaschine, insbesondere einer Laserbearbeitungsmaschine. Durch die magnetische Kopplung des Bearbeitungswerkzeugs mit dem Trägerelement kann ein Kollisionsschutz realisiert werden, um Beschädigungen des Bearbeitungswerkzeugs bei der Kollision mit einem Werkstück zu vermeiden.

Vorzugsweise sind/ist der Elektromagnet und/oder der Permanentmagnet an dem Trägerelement angebracht. Die Anbringung am Trägerelement ist günstig, da in diesem Fall nicht jedes der Bearbeitungswerkzeuge mit einer eigenen Spannungsversorgung bzw. mit eigenen Permanentmagneten ausgerüstet werden muss. Es versteht sich, dass der Elektromagnet zumindest einen Teilbereich der Kontaktfläche an dem Trägerelement bilden kann.

In einer Weiterbildung ist das mindestens eine Indexierelement am Bearbeitungswerkzeug angebracht und die zugehörige Aufnahme ist am Trägerelement gebildet. Dies ist insbesondere günstig, wenn die Aufnahmeelemente einen elektrischen Kontakt erzeugen, der durch das Indexierelement geschlossen wird, da die Aufnahmeelemente in diesem Fall mit elektrischen Leitungen, z.B. mit Drähten, zur Weiterleitung des Signals an eine Signalerfassungseinrichtung bzw. eine Steuereinrichtung versehen werden, die typischer Weise an dem Trägerelement gebildet ist bzw. mit diesem in signaltechnischer Verbindung steht.

In einer weiteren Ausführungsform weisen die Kontaktflächen jeweils eine Öffnung zum Durchtritt von Laserstrahlung auf. Handelt es sich bei dem Bearbeitungswerkzeug um einen Laserbearbeitungskopf, z.B. um einen Laserschneidkopf, dient auch das Trägerelement typischer Weise zur Strahlführung für die Laserstrahlung. Die Öffnungen in den jeweiligen Kontaktflächen überlappen sich bei einer korrekten Positionierung des Laserbearbeitungskopfs vollständig, wobei die Zentrierung bzw. die Festlegung der relativen Lage der Öffnungen zueinander z.B. durch einen Ringbund an einer Kontaktfläche vorgenommen werden kann, welcher in eine entsprechende Aufnahme an der zweiten Kontaktfläche eingreift.

Die Erfindung ist auch verwirklicht in einem Verfahren zum lagerichtigen Positionieren einer planen Kontaktfläche eines Bearbeitungswerkzeugs, insbesondere eines Laserbearbeitungskopfs, relativ zu einer planen Kontaktfläche eines Trägerelements, an dem das Bearbeitungswerkzeug durch eine magnetische Haltekraft gehalten ist, umfassend: Bewegen der Kontaktflächen relativ zueinander in einer gemeinsamen Kontaktebene durch Erzeugen einer Vibrationsbewegung der Kontaktflächen mittels einer Oszillation der magnetischen Haltekraft, bis eine Haltestellung mit einer vorgegebenen relativen Lage der Kontaktflächen zueinander erreicht ist.

Bei dem erfindungsgemäßen Verfahren ist das Bearbeitungswerkzeug in einer ersten Haltestellung an dem Trägerelement durch eine (konstante) magnetische Haltekraft gehalten und somit grob positioniert. Durch die Einleitung einer Vibrationsbewegung im Wesentlichen senkrecht zu den Kontaktflächen kann eine selbsttätige Relativbewegung und damit eine zweite, beispielsweise gegenüber der ersten Haltestellung verdrehte Haltestellung (Endlage) der Kontaktflächen erreicht werden. Nach dem Erreichen der Endlage wird das Bearbeitungswerkzeug wieder über eine (konstante) magnetische Haltekraft fixiert. Diese Haltekraft kann beispielsweise in einer durch einen Permanentmagneten aufgebrachten Kraftkomponente bestehen, die durch einen Elektromagneten verstärkt wird, an den eine konstante Spannung angelegt wird. Die (konstante) Haltekraft in der zweiten Haltestellung übersteigt hierbei in der Regel die (konstante) Haltekraft in der ersten Haltestellung.

In einer Variante wird die Oszillation der magnetischen Haltekraft von einem Elektromagneten erzeugt, an den ein oszillierendes Steuersignal angelegt wird. Bei dem Steuersignal kann es sich um eine ggf. in Amplitude und/oder Frequenz modulierte Wechselspannung handeln. Alternativ kann auch eine Gleichspannung entsprechend moduliert werden, um ein Impulssignal zu erzeugen.

Bei einer weiteren Variante wird durch den mindestens einen Permanentmagneten eine statische Haltekraft erzeugt. Es ist vorteilhaft, wenn diese statische Haltekraft groß genug ist, um das Bearbeitungswerkzeug an dem Trägerelement zu halten, ohne dass eine zusätzliche Verstärkung der Haltekraft durch einen Elektromagneten erfolgt. Es versteht sich, dass eine solche Erhöhung der Haltekraft durch den Elektromagneten insbesondere nach dem Erreichen der vordefinierten Kontaktbedingungen für eine nachfolgende Werkstückbearbeitung (aufgrund der auftretenden Prozesskräfte) vorteilhaft sein kann.

Bei einer weiteren Variante erfolgt die Oszillation der magnetischen Haltekraft im Wesentlichen senkrecht zu den Kontaktflächen. Dies kann erreicht werden, indem mit dem Elektromagneten ein oszillierendes Magnetfeld erzeugt wird, dessen Feldlinien im Wesentlichen senkrecht zu den Kontaktflächen ausgerichtet sind, so dass auch die Vibrationsbewegung im Wesentlichen senkrecht zu den Kontaktflächen bzw. senkrecht zu einer gemeinsamen Kontaktebene verläuft.

Bei einer weiteren Variante wird die Vibrationsbewegung für eine vorgegebene Zeitdauer durchgeführt und nach dem Ablauf der Zeitdauer wird geprüft, ob die (zweite) Haltestellung erreicht ist. Bei dieser Variante kann die Vibrationsbewegung über eine Zeitdauer von beispielsweise ca. 2, 3, 5 oder 10 Sekunden durchgeführt und erst nach der Vibrationsbewegung überprüft werden, ob die vorgegebenen Kontaktbedingungen erreicht sind. Ergibt die Abfrage, dass die Kontaktbedingungen noch nicht erreicht sind, kann dieser Vorgang ggf. mehrmals wiederholt werden.

Sofern die Zeitdauer ausreichend groß gewählt wird und die Vibrationsbewegung eine gerichtete Bewegung der Kontaktflächen in Richtung auf die Endstellung ermöglicht, kann gegebenenfalls auf den Schritt des Abfragens nach dem Ablauf der vorgegebenen Zeitdauer verzichtet werden. Eine gerichtete Bewegung bzw. eine Selbstzentrierung der Kontaktflächen kann z.B. erfolgen, wenn die Aufnahmen für die Indexierelemente als Führungen (Gleitflächen) ausgebildet sind, welche die Indexierelemente bei der Vibrationsbewegung in Richtung auf eine definierte, in der Regel zentrierte Endstellung führen. Dies kann z.B. durch Aufnahmen erreicht werden, die konisch ausgebildet sind.

In einer Variante wird vor dem Einleiten der Vibrationsbewegung geprüft, ob die Haltestellung erreicht ist. Liegen die Kontaktbedingungen schon nach der Grobpositionierung vor, kann auf das Einleiten der Vibrationsbewegung typischer Weise vollständig verzichtet werden.

Es versteht sich, dass auch während der Vibrationsbewegung das Vorliegen der Kontaktbedingungen mehrmals bzw. permanent überprüft werden kann. In diesem Fall kann die Vibrationsbewegung gestoppt werden, sobald das Erreichen der vorgegebenen Kontaktbedingungen erkannt wurde.

Bei einer weiteren Variante weist in der Haltestellung mindestens ein Indexierelement, das bevorzugt an einer der Kontaktflächen gebildet ist, eine vorgegebene, insbesondere zentrierte Lage im Bezug auf eine zugehörige Aufnahme auf, die bevorzugt an der anderen Kontaktfläche gebildet ist. Die Abfrage der Kontaktbedingungen in der Haltestellung kann mittels einer Sensoreinheit automatisiert oder ggf. auch manuell, z.B. auf Knopfdruck, erfolgen. Die Abfrage kann ggf. auch von einem Bediener direkt vorgenommen werden, z.B. durch Ablesen von an dem Trägerelement bzw. dem Bearbeitungswerkzeug angebrachten Markierungen.

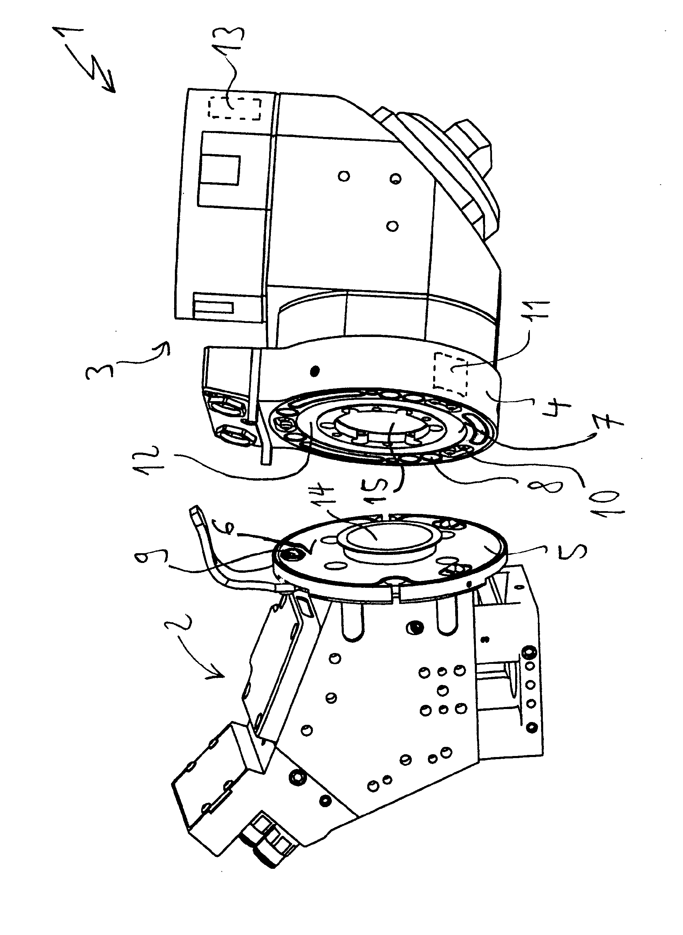

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Figur: eine schematische Darstellung einer Positioniereinrichtung zur Halterung eines Laserbearbeitungskopfs an einem Trägerelement.

Die **Figur** zeigt eine Positioniereinrichtung **1**, welche Teil einer (nicht gezeigten) Laserbearbeitungsmaschine ist. Die Positioniereinrichtung **1** weist einen Laserbearbeitungskopf **2** sowie ein Trägerelement **3** zur Halterung des Laserbearbeitungskopfs 2 auf. Das Trägerelement 3 weist einen Abschnitt einer Strahlführung für Laserstrahlung auf, die von einer (nicht gezeigten) Laserquelle ausgeht und zur Laserbearbeitung über den Laserbearbeitungskopf 2 einem (nicht gezeigten) Werkstück zugeführt wird.

Das Trägerelement 3 weist einen Flansch **4** zur lösbaren Verbindung mit einer an dem Laserbearbeitungskopf 2 angebrachten Jochplatte **5** auf. Die Stirnseite des Flanschs **4** sowie die Stirnseite der Jochplatte 5 bilden jeweils eine Kontaktfläche **6**, **7** und werden miteinander in Anlage gebracht, um den Laserbearbeitungskopf 2 an dem Trägerelement 3 zu Positionieren bzw. zu halten. Um eine statische Haltekraft auf den Laserbearbeitungskopf 2 auszuüben, die groß genug ist, um die Wirkung der Gewichtskraft auf den Laserbearbeitungskopf 2 zu kompensieren, sind an dem Flansch 4 des Trägerelements 3 mehrere kreisförmige Permanentmagnete **8** angebracht, die an entsprechenden Stellen an der Jochplatte 5 in Anlage gebracht werden, welche aus einem magnetisierbaren Material, z.B. einem Metall, gebildet sind.

Zur Zentrierung bzw. zur definierten Lagerung des Laserbearbeitungskopfs 2 dienen drei an der Kontaktfläche 6 der Jochplatte 5 angebrachte Indexierelemente in Form von konischen Druckstücken **9**, die in einem jeweiligen Freiraum zwischen jeweils zwei benachbarten, als Aufnahme dienenden Kegelstümpfen **10** an der Kontaktfläche 7 des Flansches 4 des Trägerelements 3 positioniert werden sollen. Als Aufnahme für das Druckstück 9 dient genauer gesagt eine Vertiefung zwischen den benachbarten Kegelstümpfen 10, die zur Führung eines jeweiligen Druckstücks 9 dienen. Die durch die Kegelstümpfe 10 bzw. die Druckstücke 9 gebildeten Lagerstellen können aus gehärtetem Stahl oder aus einem anderen Material mit ausreichendem Widerstand gegen Verformung, insbesondere vor dem Hintergrund wiederholter Kontaktierung, bestehen, um eine reproduzierbare Positionierung der Kontaktflächen 6, 7 in einer parallel zu den (planen) Kontaktflächen verlaufenden Kontaktebene zu ermöglichen.

Problematisch bei dieser mechanischen Indexierung ist es jedoch, dass eine Reproduzierbarkeit der Positionierung aufgrund der großen Reibungskräfte zwischen den Kontaktflächen 6, 7 ggf. nicht gegeben ist, so dass eine Abweichung von der vordefinierten bzw. gewünschten (Winkel-) lage zwischen den Kontaktflächen 6, 7 auftreten kann. Eine solche Fehlpositionierung kann eine ungenaue Positionierung des Laserbearbeitungskopfes 2 zur Folge haben, die sich nachteilig auf die Bearbeitungsqualität auswirken kann. Im schlimmsten Fall kann die durch entsprechende Öffnungen **14, 15** an den Kontaktflächen 6, 7 in den Laserbearbeitungskopf 2 eingetretene Laserstrahlung fehlgeleitet werden und im Laserbearbeitungskopf 2 zur thermischen Belastung bis hin zur Schädigung der von der Laserstrahlung getroffenen Komponenten der Strahlführung führen.

Mit den als Aufnahme dienenden Kegelstümpfen 10 ist eine in der Figur gestrichelt dargestellte Sensoreinheit **11** gekoppelt, welche die lagerichtige Positionierung des Laserbearbeitungskopfs 2 erkennen soll. Die Sensoreinheit 11 kann beispielsweise einen Stromkreis aufweisen, bei dem die gewünschten Anlagepunkte der Druckstücke 9 zwischen jeweils zwei benachbarten Kegelstümpfen 10 in Reihe geschaltet sind. Wenn alle Druckstücke 9 sich an dem jeweils gewünschten Anlagepunkt zwischen benachbarten Kegelstümpfen 10 befinden, ist der Stromkreis geschlossen. Sobald eines der Druckstücke 9 von den Kegelstümpfen 10 abgehoben wird, z.B. bei einer Kollision des Laserbearbeitungskopfs 2 mit einem Werkstück, wird der Stromkreis unterbrochen und die Laserbearbeitung wird angehalten.

Bei der mit den Aufnahmen 10 in Verbindung stehenden Sensoreinheit 11 zur Positionsbestimmung bzw. zur Feststellung des Vorhandenseins des Laserbearbeitungskopfes 2 an der Kontaktfläche 7 kann ggf. ein Fehlsignal weitergeleitet werden, obwohl der Laserbearbeitungskopf 2 mit dem Trägerelement 3 verbunden ist. Auch kann abhängig von der Auflösung der Sensoreinheit 11, die beispielsweise durch die Größe der Kontaktstellen vorgegeben ist, ggf. eine lagerichtige Verbindung angezeigt werden, obwohl die relative Positionierung ungenau ist.

Um die Positioniergenauigkeit, welche durch die mechanische Indexierung erreicht wird, weiter zu erhöhen, kann ein an dem Trägerelement 3 angebrachter ringförmiger Elektromagnet **12** mittels einer Steuereinrichtung **13**, welche in der Figur als zum Trägerelement 3 gehörig dargestellt ist, aber in der Regel an anderer Stelle in der Laserbearbeitungsmaschine angeordnet ist, mit einem Steuersignal beaufschlagt werden, welches eine Oszillation der magnetischen Haltekraft der aus den Permanentmagneten 8 und dem Elektromagneten 12 gebildeten Magnetanordnung bewirkt. Diese Stärke der Oszillation der magnetischen Haltekraft ist so gewählt, dass kurzzeitig die statische Haltekraft (nahezu) überwunden wird, so dass eine senkrecht zur den Kontaktflächen 6, 7 verlaufende Vibrationsbewegung erzeugt wird. Diese Vibrationsbewegung ermöglicht neben der primären, durch die Oszillation der magnetischen Haltekraft hervorgerufenen axialen Relativbewegung eine radiale und/oder tangentiale Relativbewegung zwischen den Kontaktflächen 6, 7 aus der ersten Haltestellung. Es versteht sich, dass zur Verstärkung der Haltekraft der Elektromagnet 12 in der ersten Haltestellung mit einer konstanten Spannung beaufschlagt werden kann, die während der Vibrationsbewegung gegebenenfalls abgeschaltet wird, so dass die Haltekraft bei der Vibrationsbewegung allein durch die Permanentmagnete 8 aufgebracht wird.

Eine gerichtete Bewegung der Kontaktflächen 6, 7 relativ zueinander zum Erreichen einer zweiten Haltestellung, bei welcher vorgegebene Kontaktbedingungen der Kontaktflächen 6, 7 erfüllt sind, kann durch eine geeignete Formgebung der als Indexierelemente dienenden Druckstücke 9 sowie der Aufnahmen 10 erreicht werden. Hierbei können die Aufnahmen 10 als Führungen bzw. Gleitflächen dienen, die bei der Vibrationsbewegung die Druckstücke 9 in Richtung auf die zweite Haltestellung (Endlage) bewegen. Diese Endlage kann beispielsweise am tiefsten Punkt zwischen den als Aufnahme dienenden Kegelstümpfen 10 liegen. Auf diese Weise kann bei der Vibrationsbewegung eine Selbstzentrierung der Kontaktflächen 6, 7 erfolgen.

Erfolgt eine solche Selbstzentrierung der Kontaktflächen 6, 7, ist typischerweise die maximale Zeitdauer, welche die Zentrierung benötigt, im Voraus bekannt. Die Zeitdauer der Vibrationsbewegung kann daher mindestens so groß gewählt werden, dass die zweite Haltestellung auf jeden Fall erreicht wird, z.B. mindestens 5 Sekunden. In diesem Fall kann ggf. auf eine Abfrage, ob die gewünschte Haltestellung erreicht wurde, verzichtet werden, so dass auch das Problem der ggf. unzureichenden Auflösung der Sensoreinheit 11 nicht mehr besteht. Typischer Weise wird aber durch die Sensoreinheit 11 das Erreichen der vordefinierten Kontaktbedingungen erkannt und durch die Steuereinheit 13 beim Vorliegen der Kontaktbedingungen die magnetische Haltekraft durch Anlegen eines konstanten Spannungssignals an den Elektromagneten 12 erhöht.

Alternativ zu einer gerichteten Bewegung der Kontaktflächen 6, 7 in der gemeinsamen Ebene auf die (zweite) Haltestellung zu, in der die vordefinierten Kontaktbedingungen zwischen den Kontaktflächen 6, 7 vorliegen, kann die durch die Vibration ausgelöste Bewegung auch ungerichtet erfolgen, d.h. es sind keine Gleitflächen an den Aufnahmen vorgesehen, die eine Selbstzentrierung bei der Vibrationsbewegung bewirken. In diesem Fall kann die Vibrationsbewegung ggf. mehrmals für eine vordefinierte Zeitdauer, z.B. 5 Sekunden oder 2 Sekunden durchgeführt werden und jeweils nach dem Abschluss der Vibrationsbewegung mit Hilfe der Sensoreinheit 11 überprüft werden, ob die Kontaktbedingungen bereits erreicht wurden. Ein solches Vorgehen kann selbstverständlich auch bei der oben beschriebenen gerichteten Bewegung der Kontaktflächen 6, 7 bzw. der Selbstzentrierung erfolgen.

Alternativ können die Kontaktbedingungen auch mehrmals oder permanent während der Vibrationsbewegung abgefragt werden, so dass das Erreichen der gewünschten Kontaktbedingungen schon während der Vibrationsbewegung erkannt wird und diese beim Erreichen der vordefinierten Kontaktbedingungen beendet wird. Alternativ oder zusätzlich kann eine Abfrage der Kontaktbedingungen auch in der ersten Haltestellung nach der Grobpositionierung und vor dem Einleiten der Vibrationsbewegung erfolgen, um zu überprüfen, ob die vorgegebenen Kontaktbedingungen schon nach der Grobpositionierung vorliegen. In diesem Fall kann auf das Einleiten der Vibrationsbewegung verzichtet werden. Es versteht sich, dass die Abfrage der Kontaktbedingungen nicht zwingend automatisiert erfolgen muss, sondern ggf. auch manuell durchgeführt werden kann, z.B. auf Knopfdruck.

Zur Erzeugung der Vibrationsbewegung bzw. des oszillierenden Magnetfeldes dient der ringförmige Elektromagnet 12. Der Elektromagnet 12 erzeugt hierbei ein Magnetfeld, welches im Wesentlichen senkrecht zu den aneinander anliegenden Kontaktflächen 6, 7 ausgerichtet ist. Durch das Erzeugen einer Oszillation dieses Magnetfeldes kann eine die statische Haltekraft überlagernde Kräfteoszillation erzeugt werden. Eine solche die Haltekraft überlagernde Kräfteoszillation kann durch das Anlegen eins Steuersignals, insbesondere eines Spannungssignals, an den Elektromagneten 12 erreicht werden, welches durch eine kurzfristig gegenpolige Magnetfeldinduzierung eine ebenso kurzfristige Beabstandung der Kontaktflächen 6, 7 entgegen der Haltekraft verursacht.

Als Steuersignal kann beispielsweise eine von der Steuereinrichtung 11 erzeugte, an den Elektromagneten 12 angelegte Wechselspannung dienen. Die Amplitude der Wechselspannung liegt bei den vorliegenden Anwendungen typischer Weise im Bereich zwischen ca. 6 V und ca. 60 V. Die Frequenz der Wechselspannung liegt typischer Weise zwischen ca. 25 Hz und 100 Hz, wobei diese Angaben unter anderem vom verwendeten Elektromagneten 12 sowie vom verwendeten Laserbearbeitungskopf 2 abhängig sind. Alternativ kann an Stelle einer Wechselspannung ein aus einer Gleichspannung erzeugtes Impulssignal mit vorgegebener Spannungsamplitude im Bereich zwischen ca. 6 V und ca. 60 V und einer Frequenz im Bereich von typischer Weise zwischen ca. 25 Hz und 100 Hz dienen. Letzteres ist bei Bearbeitungsmaschinen vorteilhaft, welche mit Gleichspannung betrieben werden, da auf diese Weise das Vorsehen von zusätzlichen Komponenten zur Erzeugung einer Wechselspannung vermieden werden kann. Die Amplitude und Frequenz des Steuersignals können hierbei über die gesamte Zeitdauer der Vibrationsbewegung konstant gewählt werden oder die Amplitude bzw. die Frequenz können veränderlich sein und beispielsweise in Form von Rampen oder dergleichen vorgegeben werden.

Alternativ zu einem sowohl für die Grob- als auch für die Feinpositionierung gemeinsam genutzten Elektromagneten 12 kann bei der Positioniereinrichtung 1 auch ein Elektromagnet für die Grobpositionierung und ein weiterer Elektromagnet für die Feinpositionierung vorgesehen sein. Es hat sich als günstig erwiesen, wenn Permanentmagnete 8 für die Grobpositionierung vorgesehen sind, deren Haltekraft die Gewichtskraft des Laserbearbeitungskopfs 2 übersteigt, so dass der Laserbearbeitungskopf 2 unabhängig vom Maschinenzustand und der damit gekoppelten Stromversorgung an dem Trägerelement 3 gehalten werden kann. Der Elektromagnet 12 kann wie in der Figur gezeigt Teile der Kontaktfläche 7 des Trägerelements 3 ausbilden, dies ist aber nicht zwingend erforderlich, d.h. der Elektromagnet bzw. dessen Spulenwicklungen können ggf. gegenüber der Kontaktfläche 7 zurückgesetzt bzw. durch diese verdeckt sein.

Insgesamt kann durch die gezielte Steuerung bzw. Oszillation der magnetischen Haltekraft eine Vibrationsbewegung erzeugt werden, welche die Reibungskräfte zwischen den Kontaktflächen 6, 7 überwindet und somit eine schnelle, genaue und insbesondere reproduzierbare Positionierung des Laserbearbeitungskopfs 2 und des Trägerelements 3 relativ zueinander ermöglicht. Es versteht sich, dass an Stelle eines Laserbearbeitungskopfs auch andere Bearbeitungswerkzeuge auf die oben beschriebene Weise lagerichtig positioniert bzw. relativ zueinander ausgerichtet werden können.

## Patentansprüche

1. Positioniereinrichtung (1) zur lagerichtigen Positionierung einer planen Kontaktfläche (6) eines Bearbeitungswerkzeugs, insbesondere eines Laserbearbeitungskopfs (2), relativ zu einer planen Kontaktfläche (7) eines Trägerelements (3), umfassend:
eine Magnetanordnung (8, 12), die zum Erzeugen einer magnetischen Haltekraft zwischen den Kontaktflächen (6, 7) zur Halterung des Bearbeitungswerkzeugs (2) an dem Trägerelement (3) ausgebildet ist, sowie
eine Steuereinrichtung (13), die zum Erzeugen einer Oszillation der magnetischen Haltekraft der Magnetanordnung (8, 12) ausgebildet ist, um durch Erzeugung einer Vibrationsbewegung die Kontaktflächen (6, 7) relativ zueinander in einer gemeinsamen Kontaktebene zu bewegen, bis eine Haltestellung mit einer vorgegebenen relativen Lage der Kontaktflächen (6, 7) zueinander erreicht ist.

2. Positioniereinrichtung nach Anspruch 1, bei welcher die Magnetanordnung einen Elektromagneten (12) umfasst und die Steuereinrichtung (13) zum Anlegen eines oszillierenden Steuersignals an den Elektromagneten (12) ausgebildet ist.

3. Positioniereinrichtung nach Anspruch 2, bei welcher die Steuereinrichtung (13) zum Erzeugen eines Steuersignals in Form einer Wechselspannung oder eines Impulssignals ausgebildet ist.

4. Positioniereinrichtung nach einem der vorhergehenden Ansprüche, weiter umfassend: eine Sensoreinrichtung (11) zum Erkennen einer Haltestellung, bei der die Kontaktflächen (6, 7) eine vorgegebene relative Lage zueinander aufweisen.

5. Positioniereinrichtung nach Anspruch 4, bei welcher die Sensoreinrichtung (11) zum Erkennen einer vorgegebenen, insbesondere zentrierten Lage mindestens eines bevorzugt an einer Kontaktfläche (6) angebrachten Indexierelements (9) in Bezug auf eine zugehörige, bevorzugt an der anderen Kontaktfläche (7) gebildete Aufnahme (10) ausgebildet ist.

6. Positioniereinrichtung nach einem der vorhergehenden Ansprüche, bei welcher die Magnetanordnung mindestens einen Permanentmagneten (8) zum Erzeugen einer statischen magnetischen Haltekraft zwischen den Kontaktflächen (6, 7) aufweist.

7. Positioniereinrichtung nach einem der vorhergehenden Ansprüche, weiter umfassend: einen Bearbeitungskopf, insbesondere einen Laserbearbeitungskopf (2) und ein Trägerelement (3).

8. Positioniereinrichtung nach Anspruch 7, bei welcher der Elektromagnet (12) und/oder der Permanentmagnet (8) an dem Trägerelement (3) angebracht ist/sind.

9. Positioniereinrichtung nach einem der Ansprüche 7 oder 8, bei welcher die mindestens eine Aufnahme (10) am Trägerelement (3) angebracht ist.

10. Positioniereinrichtung nach einem der Ansprüche 7 bis 9, bei welcher die Kontaktflächen (6, 7) jeweils eine Öffnung (14, 15) zum Durchtritt von Laserstrahlung aufweisen.

11. Verfahren zum lagerichtigen Positionieren einer planen Kontaktfläche (6) eines Bearbeitungswerkzeugs, insbesondere eines Laserbearbeitungskopfs (2), relativ zu einer planen Kontaktfläche (7) eines Trägerelements (3), an dem das Bearbeitungswerkzeug (2) durch eine magnetische Haltekraft gehalten ist, umfassend:
Bewegen der Kontaktflächen (6, 7) relativ zueinander in einer gemeinsamen Kontaktebene durch Erzeugen einer Vibrationsbewegung der Kontaktflächen (6, 7) mittels einer Oszillation der magnetischen Haltekraft, bis eine Haltestellung mit einer vorgegebenen relativen Lage der Kontaktflächen (6, 7) zueinander erreicht ist.

12. Verfahren nach Anspruch 11, bei dem die Oszillation der magnetischen Haltekraft von einem Elektromagneten (13) erzeugt wird, an den ein oszillierendes Steuersignal angelegt wird.

13. Verfahren nach Anspruch 11 oder 12, bei dem durch mindestens einen Permanentmagneten (8) eine statische Haltekraft erzeugt wird.

14. Verfahren nach einem der Ansprüche 11 bis 13, bei dem die Oszillation der magnetischen Haltekraft im Wesentlichen senkrecht zu den Kontaktflächen (6, 7) erfolgt.

15. Verfahren nach einem der Ansprüche 11 bis 14, bei dem die Vibrationsbewegung für eine vorgegebene Zeitdauer durchgeführt wird und nach dem Ablauf der Zeitdauer geprüft wird, ob die Haltestellung erreicht ist.

16. Verfahren nach einem der Ansprüche 11 bis 15, bei dem vor dem Einleiten der Vibrationsbewegung geprüft wird, ob die Haltestellung erreicht ist.

17. Verfahren nach einem der Ansprüche 11 bis 16, bei dem in der Haltestellung mindestens ein bevorzugt an einer der Kontaktflächen (6) angebrachtes Indexierelement (9) eine vorgegebene, insbesondere zentrierte Lage im Bezug auf eine zugehörige, bevorzugt an der anderen Kontaktfläche (7) angebrachte Aufnahme (10) aufweist.

## Claims

1. Positioning device (1) for positioning a planar contact surface (6) of a processing tool, in particular a laser processing head (2), in the correct position relative to a planar contact surface (7) of a support element (3), comprising:
a magnet arrangement (8, 12) designed for generating a magnetic holding force between the contact surfaces (6, 7) for holding the processing tool (2) on the support element (3), as well as
a control means (13), designed for generating oscillation of the magnetic holding force of the magnet arrangement (8, 12) in order to move the contact surfaces (6, 7) relative to each other on a common contact plane by generating a vibration movement until a holding position with a predetermined relative position of the contact surfaces (6, 7) to each other is reached.

2. Positioning device according to claim 1, wherein the magnet arrangement comprises an electromagnet (12) and the control means (13) is designed for applying an oscillating control signal to the electromagnet (12).

3. Positioning device according to claim 2, wherein the control means (13) is designed for generating a control signal in the form of an alternating current or an impulse signal.

4. Positioning device according to one of the preceding claims, further comprising: a sensor means (11) for detecting a holding position, wherein the contact surfaces (6, 7) are in a predetermined relative position to each other.

5. Positioning device according to claim 4, wherein the sensor means (11) is designed for detecting a predetermined, in particular centralised position of at least one indexing element (9), preferably formed on a contact surface (6), in relation to an associated take-up (10), preferably formed on the other contact surface (7).

6. Positioning device according to one of the preceding claims, wherein the magnet arrangement comprises at least one permanent magnet (8) for generating a static magnetic holding force between the contact surfaces (6, 7).

7. Positioning device according to one of the preceding claims, further comprising: a processing head, in particular a laser processing head (2) and a support element (3).

8. Positioning device according to claim 7, wherein the electromagnet (12) and/or the permanent magnet (8) are mounted on the support element (3).

9. Positioning device according to one of the claims 7 or 8, wherein the at least one take-up (10) is mounted on the support element (3).

10. Positioning device according to one of the claims 7 to 9, wherein the contact surfaces (6, 7) each comprise an opening (14, 15) for the passage of laser radiation.

11. Method for positioning a planar contact surface (6) of a processing tool, in particular a laser processing head (2), in the correct position relative to a planar contact surface (7) of a support element (3), on which the processing tool (2) is held by means of a magnetic holding force, comprising:
moving the contact surfaces (6, 7) relative to each other on a common contact plane by creating a vibration movement of the contact surfaces (6, 7) by means of oscillation of the magnetic holding force until a holding position with the predetermined relative position of the contact surfaces (6, 7) to each other is reached.

12. Method according to claim 11, wherein oscillation of the magnetic holding force is generated by an electromagnet (13), to which an oscillating control signal is applied.

13. Method according to claim 11 or 12, wherein a static holding force is generated by at least one permanent magnet (8).

14. Method according to one of the claims 11 to 13, wherein oscillation of the magnetic holding force is generated substantially perpendicular to the contact surfaces (6, 7).

15. Method according to one of the claims 11 to 14, wherein the vibration movement is generated for a predetermined time period and it is checked upon expiry of said time period whether the holding position has been reached.

16. Method according to one of the claims 11 to 15, whereby it is checked prior to initiating the vibration movement whether the holding position has been reached.

17. Method according to one of the claims 11 to 16, wherein in the holding position, at least one indexing element (9), preferably mounted on one of the contact surfaces (6), is in a predetermined, in particular centralised position in relation to an associated take-up (10), preferably mounted on the other contact surface (7).

## Revendications

1. Dispositif de positionnement (1) pour le positionnement correct d'une surface de contact plane (6) d'un outil d'usinage, en particulier d'une tête d'usinage au laser (2), par rapport à une surface de contact plane (7) d'un élément de support (3), comprenant :
un agencement magnétique (8, 12) qui est conçu pour générer une force de maintien magnétique entre les surfaces de contact (6, 7) pour maintenir l'outil d'usinage (2) sur l'élément de support (3), et
un dispositif de commande (13) qui est conçu pour générer une oscillation de la force de maintien magnétique de l'agencement magnétique (8, 12) afin de déplacer, par génération d'un mouvement de vibration, les surfaces de contact (6, 7) l'une par rapport à l'autre dans un plan de contact commun jusqu'à ce qu'une position de maintien avec une position relative prédéfinie des surfaces de contact (6, 7) l'une par rapport à l'autre soit atteinte.

2. Dispositif de positionnement selon la revendication 1, dans lequel l'agencement magnétique comprend un électroaimant (12) et le dispositif de commande (13) est conçu pour appliquer un signal de commande oscillant à l'électroaimant (12).

3. Dispositif de positionnement selon la revendication 2, dans lequel le dispositif de commande (13) est conçu pour générer un signal de commande sous la forme d'une tension alternative ou d'un signal impulsionnel.

4. Dispositif de positionnement selon l'une des revendications précédentes, comprenant en outre : un dispositif capteur (11) pour détecter une position de maintien dans laquelle les surfaces de contact (6, 7) présentent une position relative prédéfinie l'une par rapport à l'autre.

5. Dispositif de positionnement selon la revendication 4, dans lequel le dispositif capteur (11) est conçu pour détecter une position prédéfinie, en particulier centrée, d'au moins un élément d'indexation (9) disposé de préférence sur une surface de contact (6) par rapport à un logement (10) correspondant, formé de préférence sur l'autre surface de contact (7).

6. Dispositif de positionnement selon l'une des revendications précédentes, dans lequel l'agencement magnétique présente au moins un aimant permanent (8) pour générer une force de maintien magnétique statique entre les surfaces de contact (6, 7).

7. Dispositif de positionnement selon l'une des revendications précédentes, comprenant en outre : une tête d'usinage, en particulier une tête d'usinage au laser (2), et un élément de support (3).

8. Dispositif de positionnement selon la revendication 7, dans lequel l'électroaimant (12) et/ou l'aiment permanent (8) est/sont disposé(s) sur l'élément de support (3).

9. Dispositif de positionnement selon l'une des revendications 7 ou 8, dans lequel ledit au moins un logement (10) est disposé sur l'élément de support (3).

10. Dispositif de positionnement selon l'une des revendications 7 à 9, dans lequel les surfaces de contact (6, 7) présentent chacune une ouverture (14, 15) pour le passage d'un rayonnement laser.

11. Procédé pour le positionnement correct d'une surface de contact plane (6) d'un outil d'usinage, en particulier d'une tête d'usinage au laser (2), par rapport à une surface de contact plane (7) d'un élément de support (3) sur lequel l'outil d'usinage (2) est maintenu par une force de maintien magnétique, consistant à :
déplacer les surfaces de contact (6, 7) l'une par rapport à l'autre dans un plan de contact commun par génération d'un mouvement de vibration des surfaces de contact (6, 7) au moyen d'une oscillation de la force de maintien magnétique jusqu'à ce qu'une position de maintien avec une position relative prédéfinie des surfaces de contact (6, 7) l'une par rapport à l'autre soit atteinte.

12. Procédé selon la revendication 11, selon lequel l'oscillation de la force de maintien magnétique est générée par un électroaimant (13) auquel un signal de commande oscillant est appliqué.

13. Procédé selon la revendication 11 ou 12, selon lequel une force de maintien statique est générée par au moins un aimant permanent (8).

14. Procédé selon l'une des revendications 11 à 13, selon lequel l'oscillation de la force de maintien magnétique se produit sensiblement perpendiculairement aux surfaces de contact (6, 7).

15. Procédé selon l'une des revendications 11 à 14, selon lequel le mouvement de vibration est effectué pendant une durée prédéfinie et, à l'expiration de ladite durée, on contrôle si la position de maintien est atteinte.

16. Procédé selon l'une des revendications 11 à 15, selon lequel, avant de déclencher le mouvement de vibration, on contrôle si la position de maintien est atteinte.

17. Procédé selon l'une des revendications 11 à 16, selon lequel, dans la position de maintien, au moins un élément d'indexation (9) disposé de préférence sur une des surfaces de contact (6) présente une position prédéfinie, en particulier centrée, par rapport à un logement (10) correspondant disposé de préférence sur l'autre surface de contact (7).
